# EUROPEAN PATENT SPECIFICATION

(11) **EP 2 663 033 B1**
(45) Date of publication and mention of the grant of the patent: **01.07.2015**
(21) Application number: 11855176.1
(22) Date of filing: 06.05.2011
(51) Int. Cl.: H04W 48/12, H04W 48/20, H04W 72/04

(54) **METHOD AND SYSTEM FOR SERVICE DATA TRANSMISSION**
VERFAHREN UND SYSTEM ZUR SERVICEDATENÜBERTRAGUNG
PROCÉDÉ ET SYSTÈME DE TRANSMISSION DE DONNÉES DE SERVICE

(30) Priority: 05.01.2011 CN 201110001440
(43) Date of publication of application: 13.11.2013
(73) Proprietor: ZTE Corporation, Shenzhen, Guangdong 518057 (CN)
(72) Inventor: ZHU, Yun, Guangdong 518057 (CN); HUANG, Chun, Guangdong 518057 (CN)
(74) Representative: Quinterno, Giuseppe
(86) International application number: PCT/CN2011/073783
(87) International publication number: WO 2012/092736

(56) References cited:
- EP-A1- 2 109 324
- CN-A- 101 207 556
- CN-A- 101 242 553
- CN-Y- 201 191 842
- "3rd Generation Partnership Project; Technical Specification Group Radio Access Network; High Speed Downlink Packet Access (HSDPA); Overall description; Stage 2 (Release 10)", 3GPP STANDARD; 3GPP TS 25.308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.3.0, 17 December 2010 (2010-12-17) , pages 1-67, XP050462107, [retrieved on 2010-12-17]
- ERICSSON: "Handling of E-RNTI and H-RNTI at E-DCH for CELL_FACH and Idle", 3GPP DRAFT; R3-082127, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165178, [retrieved on 2008-08-13]

## Description

### Field of the Invention

The invention relates to the field of communications, and in particular to a method and a system for transmitting service data.

### Background of the Invention

With the development of wireless communications, types of service gradually are varied, not only limited to traditional voice and short message service. There is some "Always on" service of frequent transmission and a small data size, for example, service like Email, private network connection or the like, wherein the service can be performed on the backstage without need of users' interference, but data transmission needs to be always on.

For service like that, if adopting a traditional access method, which means at first forwarding User Equipment (UE) in the state of Cell Forward Access Channel (CELL_FACH) to the state of Cell Dedicated Channel (CELL_DCH) by paging or establishing a dedicated wireless channel, then sending or receiving user data; obviously, there would be extra signaling overhead, and an interaction process of signaling would increase time-delay of service establishment so as to decrease user experience. And if keeping the user in the state of CELL_FACH and using common channels to bear the service, because a data rate of the common channels is low, a transmission rate is comparatively low.

In a word, relative technologies are lack of schemes that can make a terminal receive and send "Always on" service data at a high data rate in the state of CELL_FACH.

3GPP TS 25.308 provides respective technical solutions, however, the above mentioned problem still remains unsolved.

### Summary of the Invention

According to the present invention, a method for transmitting data as set forth in claim 1 and a system as set forth in claim 7 are provided. Embodiments of the invention are claimed in the dependent claims. The disclosure provides a method and a system for transmitting service data to solve the issue of a low transmission rate caused by bearing "Always on" service data by use of common channels in the state of CELL_FACH in the relative technologies at least.

According to one aspect of the disclosure it provides a method for transmitting service data.

The method for transmitting service data of the invention comprises: a UE in the state of CELL_FACH establishing Radio Resource Control (RRC) connection with a base station; the UE monitoring High Speed Shared Control Channel (HS-SCCH), and acquiring control information for establishing High Speed Downlink Shared Channel (HS-DSCH) on the HS-SCCH; and the UE establishing HS-DSCH by adopting the control information and performing transmission of service data with the base station on the HS-DSCH.

Before the UE establishing RRC connection with the base station, the method further comprises: the base station notifying a Radio Network Control (RNC) of a data transmission capability of corresponding cell in the state of CELL_FACH; and the base station receiving a common Media Access Layer D (MAC-D) and a common Radio Network Temporary Identifier (RNTI) which are returned from the RNC.

The base station notifies the RNC of the data transmission capability through an auditing response and a resource status indication.

The RNC returns the common MAC-D and the common RNTI to the base station by carrying in physical shared resources reconfiguration request.

The UE establishing RRC connection with the base station comprises: the base station receiving a RRC connection establishment request from the UE in the state of CELL_FACH; the base station sending the received RRC connection establishment request to RNC through an Frame Protocol (FP), wherein the RRC connection establishment request carries an Enhanced Radio Network Temporary Identifier (E-RNTI) assigned to the UE from the base station; the base station receiving a RRC connection establishment response from the RNC sent through the FP, wherein the RRC connection establishment response carries a High Speed Downlink Shared Channel Radio Network Temporary Identifier (H-RNTI) and the E-RNTI which are assigned to the UE; and the base station sending the RRC connection establishment response to the UE.

When data is user plane data, the UE monitoring HS-SCCH comprises: the UE performing a reading operation on the fifth System Information Block (SIB5); and the base station notifying the UE of receiving the user plane data through the HS-SCCH.

When data is control plane data, the UE monitoring HS-SCCH comprises: the UE selecting one common H-RNTI according to the number of common H-RNTIs broadcasted by SIB5 and an initial UE identity; and the UE monitoring the HS-SCCH by use of the selected common H-RNTI.

The service data is "Always on" service data.

According to the other aspect of the disclosure, it provides a system for transmitting service data.

The system for transmitting service data of the invention comprises: a base station and a UE in the state of CELL_FACH; wherein the UE comprises: a first establishing module, configured to establish RRC connection with the base station; a monitoring module, configured to monitor HS-SCCH, and acquire control information for establishing HS-DSCH on the HS-SCCH; a second establishing module, configured to establish HS-DSCH by adopting the control information; and a first transmitting module, configured to perform transmission of service data with the base station on the HS-DSCH; and the base station comprises: a third establishing module, configured to establish the RRC connection with the UE; and a second transmitting module, configured to perform transmission of service data with the UE on the HS-DSCH.

The base station further comprises: a notifying module, configured to notify a RNC of a data transmission capability of corresponding cell in the state of CELL_FACH; and a receiving module, configured to receive a common MAC-D and a common RNTI which are returned from the RNC.

The monitoring module comprises: a reading unit, configured to perform a reading operation on SIB5; and a receiving unit, configured to receive notification from the base station through the HS-SCCH, wherein the notification is used for indicating the UE to receive user plane data.

The monitoring module comprises: a selecting unit, configured to select one common H-RNTI according to the number of common H-RNTIs broadcasted by SIB5 and an initial UE identity; and a monitoring unit, configured to monitor the HS-SCCH by use of the selected common H-RNTI.

The service data is "Always on" service data.

Through the invention, the UE in the state of CELL_FACH monitors the HS-SCCH after establishing RRC connection with the base station, and performs transmission of service data with the base station on the HS-DSCH corresponding to the HS-SCCH. The issue of bearing "Always on" service data by use of common channels in the state of CELL_FACH in the relative technologies is solved to further transmit service data at a high speed (for example, "Always on" service data) and improve user experience effectively.

### Brief Description of the Drawings

The drawings of brief description here are used for providing further understanding of the invention, consisting of a part of this invention. Illustrative embodiments and brief descriptions of the invention are used for making the invention clear, not subjected to improper limitation of the invention. In the drawings:
Fig. 1 is a flowchart of a method for transmitting service data according to an embodiment of the invention;
Fig. 2 is a schematic flowchart of a method for transmitting service data according to the first preferred embodiment of the invention;
Fig. 3 is a schematic flowchart of a method for transmitting service data according to the second preferred embodiment of the invention;
Fig. 4 is a structure diagram of a system for transmitting service data according to an embodiment of the invention; and
Fig. 5 is a structure diagram of a system for transmitting service data according to the preferred embodiment of the invention.

### Detailed Description of the Embodiments

In the following text, reference drawings and embodiments are combined to elaborate on the invention. What's needed to say, under the condition of no conflicts, the embodiments of the invention and characteristics of the embodiments can be mutually matched.

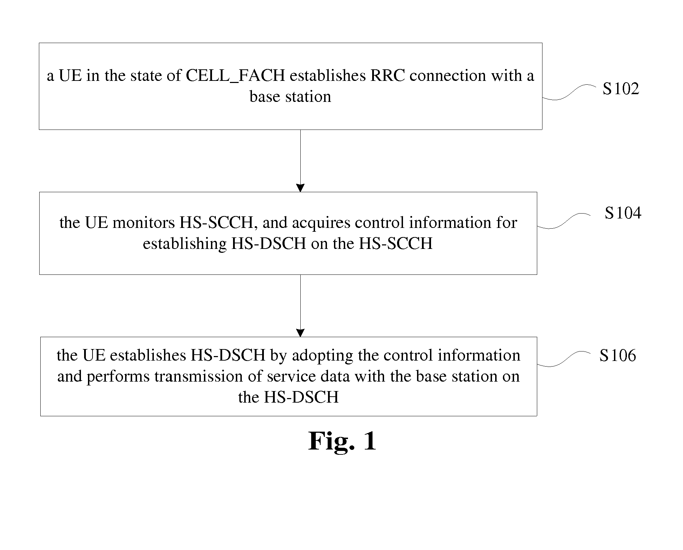

Fig. 1 is a flowchart of a method for transmitting service data according to an embodiment of the invention. Illustrated according to Fig. 1, the method for transmitting service data mainly comprises processing as follows.

Step S102: a UE in the state of CELL_FACH establishes RRC connection with a base station;

Step S104: the UE monitors HS-SCCH, and acquires control information for establishing HS-DSCH on the HS-SCCH; and

Step S106: the UE establishes HS-DSCH by adopting the control information and performs transmission of service data with the base station on the HS-DSCH.

In the method, a terminal establishes HS-DSCH to perform transmission of service data with the base station on the HS-DSCH. The terminal can receive and send "Always on" service data at a high data rate in the state of CELL_FACH without need of entering the state of CELL_DCH so as to improve user experience effectively.

In the above, the service data is not only limited to "Always on" service data, but can be service data of other types.

Preferably, before performing Step S102, further comprising processing as follows:
(1) the base station notifies a RNC of a data transmission capability of the corresponding cell in the state of CELL_FACH;
   in the preferred implementation process, the base station notifies the RNC of the data transmission capability through an auditing response and a resource status indication.
(2) the base station receives a common MAC-D and a common RNTI which are returned from the RNC.

In the preferred implementation process, the RNC returns the common MAC-D and the common RNTI to the base station by carrying in physical shared resources reconfiguration request.

Preferably, Step S102 may further comprise the following processing:
(1) the base station receives a RRC connection establishment request from the UE in the state of CELL_FACH;
(2) the base station sends the received RRC connection establishment request to the RNC through an FP, wherein the RRC connection establishment request carries an E-RNTI assigned to the UE from the base station;
(3) the base station receives a RRC connection establishment response from the RNC sent through the FP, wherein the RRC connection establishment response carries a H-RNTI and the E-RNTI which are assigned to the UE; and
(4) the base station sends the RRC connection establishment response to the UE.

Preferably, when data is user plane data, Step S106 may further comprise the following processing:
(1) the UE performs a reading operation on the SIB5; and
(2) the base station notifies the UE of receiving the user plane data through the HS-SCCH.

Preferably, when the data is control plane data, Step S106 may further comprise the following processing:
(1) the UE selects one common H-RNTI according to the number of common H-RNTIs broadcasted by the SIB5 and an initial UE identity; and
(2) the HS-SCCH is monitored by the UE by use of the selected common H-RNTI.

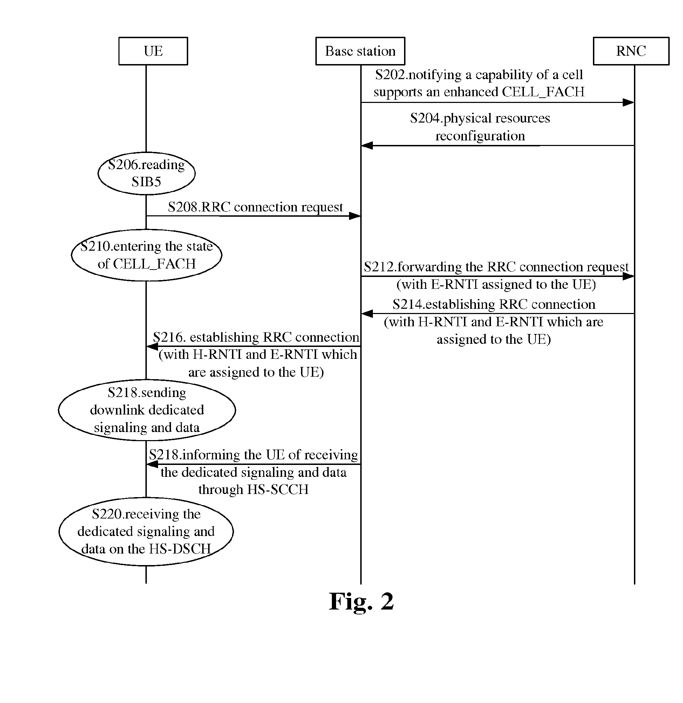

The following describes a preferred implementation way of UE transmitting Dedicated Control Channel (DCCH)/ Dedicated Traffic Channel (DTCH) data (user plane data) in the state of CELL_FACH on HS-DSCH in combination with Fig. 2.

Fig. 2 is a schematic flowchart of a method for transmitting service data according to the first preferred embodiment of the invention. Illustrated according to Fig. 2, the method of data access mainly comprises the following processing.

In the initial state, a High Speed Packet Access (HSPA) cell is established at a base station (NodeB), the UE is resided in the cell, and the UE is in the idle mode. The HSPA cell specifically means a cell in the wireless coverage for supporting High Speed Downlink Packet Access (HSDPA) or High Speed Uplink Packet Access (HSUPA). The UE physically supports receiving and sending HSDPA data or HSUPA data in the state of CELL_FACH.

Step S202, the NodeB notifies the RNC of a data transmission capability of the cell in the state of CELL_FACH through an auditing response or a resource status indication;
further, the data transmission capability of the cell in the state of CELL_FACH must be a capability that the DCCH/DTCH on the HS-DSCH can send and receive data, which means resource auditing response or resource status indication sent by the NodeB contain indication of "Enhanced Forward Access Channel (FACH) Capability".

Step S204, the RNC assigns the common MAC-D and the common RNTI to the NodeB by a physical shared resources reconfiguration request;

further, the physical shared resources reconfiguration request sent by the RNC contains "HS-DSCH Common System Information Low Chip Rate (LCR)", wherein parameter items of "Broadcast Control Channel (BCCH) Specific HS-DSCH RNTI Information LCR" and "HS-DSCH Paging System Information LCR" are included.

Step S206, the UE reads system information SIB5;

further, the system information block SIB5 includes "HS-DSCH Common System Information", further, the "HS-DSCH Common System Information" includes information units such as "HS-SCCH system info" and "Common H-RNTI Information" or the like.

Step S208, the UE sends a RRC connection establishment request message to the cell;
wherein the RRC connection establishment request message includes "High Speed Physical Downlink Shared Channel (HS-PDSCH) in CELL_FACH".

Step S21 0, the UE enters the state of CELL_FACH.

Step S212, the NodeB sends the RRC connection establishment request message to the RNC through an FP, the RRC connection establishment request message is carried with E-RNTI assigned by the NodeB to the UE.

Step S214, the RNC assigns corresponding H-RNTI and sends a RRC connection establishment response message to the NodeB through the FP, the RRC connection establishment response message is carried with the H-RNTI and the E-RNTI which are assigned to the UE.

Step S216, the NodeB sends the H-RNTI and the E-RNTI which are assigned to the UE and the RRC connection establishment response message to the UE.

Step S218, the process that sending downlink dedicated signaling and data to the UE is triggered, the cell notifies the UE of receiving the dedicated signaling and data through HS-SCCH.

Step S220, after receiving the HS-SCCH, the UE receives the dedicated signaling and data on the corresponding HS-DSCH.

Meanwhile, the UE monitors UE dedicated H-RNTI on the HS-SCCH and detects dedicated H-RNTI of the UE, the UE receives the DCCH/DTCH on the corresponding HS-DSCH Transmission Time Interval (TTI).

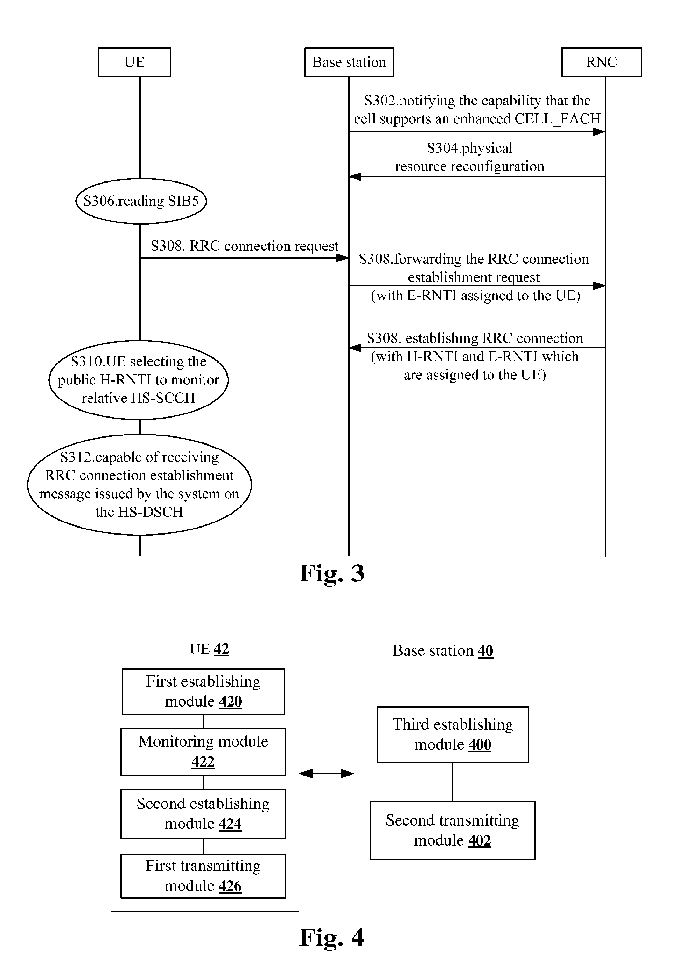

The following describes a preferred implementation way of UE transmitting DCCH/DTCH data (control plane data Signaling Radio Bearer (SRB0)) in the state of CELL_FACH on HS-DSCH in combination with Fig. 3.

Fig. 3 is a schematic flowchart of a method for transmitting service data according to the second preferred embodiment of the invention. As shown in Fig. 3, the method for transmitting service data mainly comprises the following processing.

In the initial state, a HSPA cell with a function of supporting enhanced CELL_FACH is established at a base station (NodeB), the UE is resided in the cell, and the UE is in the idle mode. The HSPA cell specifically means a cell in the wireless coverage for supporting HSDPA or HSUPA. The UE physically supports receiving and sending HSDPA data or HSUPA data in the state of CELL_FACH.

Step S302, the NodeB notifies the RNC of the capability that the cell supports enhancement of the CELL_FACH through an auditing response or a resource status indication;

further, the capability that the cell supports enhancement of CELL_FACH means an auditing response or a resource status indication sent by the NodeB includes indication of "Enhanced FACH Capability".

Step S304, the RNC assigns the common MAC-D and the common RNTI to the NodeB through a physical shared resources reconfiguration request;

further, the physical shared resources reconfiguration request sent by the RNC includes "HS-DSCH Common System Information LCR".

Step S306, the UE reads system information SIB5;
and, the SIB5 includes "HS-DSCH common system information", and the "HS-DSCH common system information" includes Internet Explorer (IE) parameters such as "HS-SCCH system info", "Common Control Channel (CCCH) mapping info" and "Common H-RNTI Information" or the like;
the UE selects one common H-RNTI according to the number of common H-RNTIs broadcasted by the SIB5 and an "Initial UE Identity", the UE monitors the common H-RNTI on the HS-SCCH, if the common H-RNTI is detected, the UE receives CCCH (SRB0) on the corresponding HS-DSCH TTI.

Step S308, the UE initiates RRC connection establishment process in the cell;
wherein the RRC connection establishment request message includes parameter of "HS-PDSCH in CELL_FACH".

Step S310, the UE selects the common H-RNTI to monitor relative HS-SCCH.

Step S312, the UE acquires control information for establishing a HS-DSCH on the HS-SCCH, establishes HS-DSCH by adopting the control information and transmits CCCH data with the NodeB on the HS-DSCH, wherein the data is carried with RRC CONNECTION SETUP.

At this time, the UE is capable of receiving RRC CONNECTION SETUP message issued by the system on the HS-DSCH.

Fig. 4 is a structure diagram of an system for transmitting service data according to an embodiment of the invention. Illustrated according to Fig. 4, the system for transmitting service data mainly includes: a base station 40 and a UE 42 in the state of CELL_FACH.

In the above, the UE 42 further includes:
a first establishing module 420, configured to establish RRC connection with the base station;
a monitoring module 422, configured to monitor HS-SCCH, and acquire control information for establishing HS-DSCH on the HS-SCCH;
a second establishing module 424, configured to establish HS-DSCH by adopting the control information; and
a first transmitting module 426, configured to perform transmission of service data with the base station on the HS-DSCH.

In the above, the base station 40 further includes:
a third establishing module 400, configured to establish RRC connection with the UE; and
a second transmitting module 402, configured to perform transmission of service data with the UE on the HS-DSCH.

In the system, the terminal establishes HS-DSCH to perform transmission of service data with the base station on the HS-DSCH. The terminal can receive and send "Always on" service data at a high data rate in the state of CELL_FACH without need of entering the state of CELL_DCH so as to improve user experience effectively.

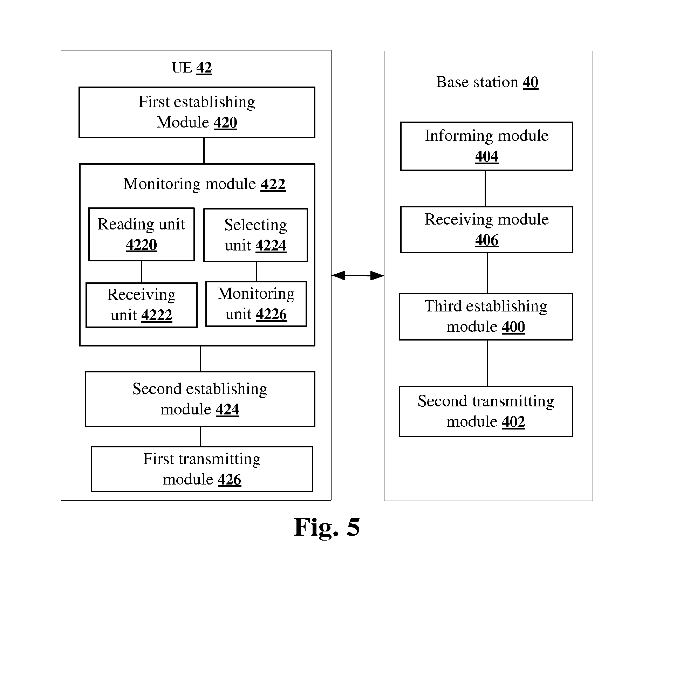

Preferably, illustrated according to Fig. 5, the base station 40 further includes: a notifying module 404, configured to notify a RNC of a data transmission capability of the corresponding cell in the state of CELL_FACH; and a receiving module 406, configured to receive a common MAC-D and a common RNTI which are returned from the RNC.

Preferably, illustrated according to Fig. 5, when data needed to be transmitted is user plane data, the monitoring module 422 further includes: a reading unit 4220, configured to perform a reading operation on the SIB5; and a receiving unit 4222, configured to receive the notification from the base station through the HS-SCCH, wherein the notification is used for indicating the UE to receive the user plane data.

Preferably, illustrated according to Fig. 5, when data needed to be transmitted is control plane data, the monitoring module 422 includes: a selecting unit 4224, configured to select one common H-RNTI according to the number of comon H-RNTIs broadcasted by the SIB5 and an initial UE identity; and a monitoring unit 4226, configured to monitor the HS-SCCH by use of the selected cmmon H-RNTI.

Note that, the preferred implementation way of combination of the base station and the UE in the system can be specifically referred to descriptions from Fig. 1 to Fig. 3, there is no further unnecessary descriptions.

In sum, due to the embodiment of the invention, after establishing RRC connection between the UE in the state of CELL_FACH and the base station, the UE monitors the HS-SCCH and perform transmission of service data with the base station on the HS-DSCH corresponding with the HS-SCCH. Therefore, the terminal can perform transmission of service data (for example, "Always on" service data) with the base station without need of entering the state of CELL_DCH, decreasing extra signaling overhead, reducing time-delay upon service establishment so as to be capable of receiving and sending service data at a high data rate and improve use experience effectively.

Obviously, technicians of the field should understand, each module or step the invention can be implemented by universal computing devices, which can be concentrated on a single computing device or distributed on a network consisting of a plurality of computing devices, optionally, which can be implemented by program codes executable by the computing devices, thus, they can be stored in storage devices to be executed by the computing devices, and in certain cases, the illustrated or described steps can be executed in an order different from the invention, or it is implemented by separately manufacturing them into each integrated circuit module, or manufacturing a plurality of modules or steps therein to single circuit modules. Thus, the invention is not limited to a combination between any dedicated hardware and software.

The above is only the preferred embodiment of the invention and not intended to limit the invention, for technicians of the field, any alterations and variations are acceptable. Any modifications, equivalent replacements, improvements and the like within the principle of the invention shall fall within the scope of protection of the invention.

## Claims

1. A method for transmitting service data comprising:
(S102) a User Equipment, UE, in the state of Cell Forward Access Channel, CELL_FACH, establishing Radio Resource Control, RRC, connection with a base station;
(S104) the UE monitoring High Speed Shared Control Channel, HS-SCCH, and acquiring control information for establishing High Speed Downlink Shared Channel, HS-DSCH, on the HS-SCCH; and
(S106) the UE establishing HS-DSCH by adopting the control information and performing transmission of service data with the base station on the HS-DSCH;
the method being **characterized in that**
when data is user plane data, the UE monitoring HS-SCCH comprises: the UE performing a reading operation on the fifth System Information Block, SIB5; and the base station notifying the UE of receiving the user plane data through the HS-SCCH; or
when data is control plane data, the UE monitoring HS-SCCH comprises: the UE selecting one common High Speed Downlink Shared Channel Radio Network Temporary Identifier, H-RNTI, according to the number of common H-RNTIs broadcasted by SIB5 and an initial UE identity; and the UE monitoring the HS-SCCH by use of the selected common H-RNTI.

2. The method according to claim 1, wherein before the UE establishing RRC connection with the base station, the method further comprises:
the base station notifying a Radio Network Control, RNC, of a data transmission capability of corresponding cell in the state of CELL_FACH; and
the base station receiving a common Media Access Layer D, MAC-D, and a common Radio Network Temporary Identifier, RNTI, which are returned from the RNC.

3. The method according to claim 2, wherein the base station notifies the RNC of the data transmission capability through an auditing response and a resource status indication.

4. The method according to claim 2, wherein the RNC returns the common MAC-D and the common RNTI to the base station by carrying in physical shared resources reconfiguration request.

5. The method according to claim 1, wherein the UE establishing RRC connection with the base station comprises:
the base station receiving a RRC connection establishment request from the UE in the state of CELL_FACH;
the base station sending the received RRC connection establishment request to RNC through an Frame Protocol, FP, wherein the RRC connection establishment request carries an Enhanced Radio Network Temporary Identifier, E-RNTI, assigned to the UE from the base station;
the base station receiving a RRC connection establishment response from the RNC sent through the FP, wherein the RRC connection establishment response carries a High Speed Downlink Shared Channel Radio Network Temporary Identifier, H-RNTI, and the E-RNTI which are assigned to the UE; and
the base station sending the RRC connection establishment response to the UE.

6. The method according to any one of claims 1 to 5, wherein the service data is "Always on" service data.

7. A system for transmitting service data, comprising: a base station and a User Equipment, UE, in the state of Cell Forward Access Channel, CELL_FACH;
the UE comprises:
a first establishing module (420), configured to establish Radio Resource Control, RRC, connection with the base station;
a monitoring module (422), configured to monitor High Speed Shared Control Channel, HS-SCCH, and acquire control information for establishing High Speed Downlink Shared Channel, HS-DSCH, on the HS-SCCH;
a second establishing module (424), configured to establish HS-DSCH by adopting the control information; and
a first transmitting module (426), configured to perform transmission of service data with the base station on the HS-DSCH; and
the base station comprises:
a third establishing module (400), configured to establish the RRC connection with the UE; and
a second transmitting module (402), configured to perform transmission of service data with the UE on the HS-DSCH;
and **characterized by** the monitoring module (422) comprising:
a reading unit, which, when data is user plane data, it is configured to perform a reading operation on the fifth System Information Block, SIB5,; and a receiving unit, configured to receive notification from the base station through the HS-SCCH, wherein the notification is used for indicating the UE to receive user plane data; or
a selecting unit, which, when data is control plane data, it is configured to select one common High Speed Downlink Shared Channel Radio Network Temporary Identifier, H-RNTI, according to the number of common H-RNTIs broadcasted by SIB5 and an initial UE identity; and a monitoring unit, configured to monitor the HS-SCCH by use of the selected common H-RNTI.

8. The system according to claim 7, wherein the base station further comprises:
a notifying module, configured to notify a RNC of a data transmission capability of corresponding cell in the state of CELL_FACH; and
a receiving module, configured to receive a common Media Access Layer D, MAC-D, and a common Radio Network Temporary Identifier, RNTI, which are returned from the RNC.

9. The system according to any one of claims 7 to 8, wherein the service data is "Always on" service data.

## Patentansprüche

1. Verfahren zum Übertragen von Dienstdaten, umfassend:
(S102) eine Benutzer-Ausrüstung, UE, im Zustand Cell Forward Access Channel, CELL_FACH, welcher eine Radio Resource Control-, RRC-, Verbindung mit einer Basisstation herstellt,
(S104) wobei die UE High Speed Shared Control Channel, HS-SCCH, überwacht und Kontrollinformationen zum Herstellen von High Speed Downlink Shared Channel, HS-DSCH, auf dem HS-SCCH empfängt; und
(S106) wobei die UE HS-DSCH durch Anpassen der Kontrollinformationen und Durchführen von Übertragung von Dienstdaten mit der Basisstation auf dem HS-DSCH herstellt;
wobei das Verfahren **dadurch gekennzeichnet ist, dass** wenn Daten Benutzerebenen-Daten sind, das Überwachen des HS-SCCH durch die UE umfasst:
Durchführen einer Leseoperation durch die UE an dem fünften System Information Block, SIB5; und Benachrichtigen der UE durch die Basisstation über ein Erhalten der Benutzerebenen-Daten durch den HS-SCCH; oder
wenn Daten Kontrollebenen-Daten sind, das Überwachen des HS-SCCH durch die UE umfasst:
Auswählen eines gemeinsamen High Speed Downlink Shared Channel Radio Network Temporary Identifiers, H-RNTI, durch die UE gemäß der Anzahl von gemeinsamen H-RNTIs, welche von SIB5 ausgesendet werden, und einer Ausgangs-UE-Identität; und Überwachen des HS-SCCH durch die UE unter Verwendung des ausgewählten gemeinsamen H-RNTI.

2. Verfahren nach Anspruch 1, wobei bevor die UE eine RRC-Verbindung mit der Basisstation herstellt, das Verfahren ferner umfasst:
Benachrichtigen einer Radio Network Control, RNC, durch die Basisstation über eine Datenübertragungs-Fähigkeit einer zugehörigen Zelle in dem Zustand CELL_FACH; und
Erhalten eines gemeinsamen Media Access Layer D, MAC-D, und eines gemeinsamen Radio Network Temporary Identifiers, RNTI, durch die Basisstation, welche von dem RNC zurückgeschickt werden.

3. Verfahren nach Anspruch 2, wobei die Basisstation die RNC über die Datenübertragungs-Fähigkeit durch eine Überprüfungs-Antwort und eine Ressourcenstatus-Anzeige benachrichtigt.

4. Verfahren nach Anspruch 2, wobei die RNC den gemeinsamen MAC-D und den gemeinsamen RNTI zu der Basisstation zurückschickt, indem sie in einer physikalisch geteilten Ressourcen-Rekonfigurationsanforderung getragen werden.

5. Verfahren nach Anspruch 1, wobei das Herstellen einer RRC-Verbindung durch die UE mit der Basisstation umfasst:
Erhalten einer RRC-Verbindungs-Herstellungsanforderung durch die Basisstation von der UE im Zustand CELL_FACH;
Schicken der erhaltenen RRC-Verbindungs-Herstellungsanforderung durch die Basisstation an RNC durch ein Frame Protocol, FP, wobei die RRC-Verbindungs-Herstellungsanforderung einen Enhanced Radio Network Temporary Identifier, E-RNTI, trägt, welcher der UE von der Basisstation zugewiesen wird;
Erhalten einer RRC-Verbindungs-Herstellungsantwort durch die Basisstation von der RNC, welche durch den FP gesendet wird, wobei die RRC-Verbindungs-Herstellungsantwort einen High Speed Downlink Shared Channel Radio Network Temporary Identifier, H-RNTI, und den E-RNTI trägt, welche der UE zugewiesen werden; und
Senden der RRC-Verbindungs-Herstellungsantwort durch die Basisstation an die UE.

6. Verfahren nach einem der Ansprüche 1 bis 5, wobei die Dienstdaten "Always on"-Dienstdaten sind.

7. System zum Übertragen von Dienstdaten, umfassend:
eine Basisstation und eine Benutzer-Ausrüstung, UE, im Zustand Cell Forward Access Channel, CELL_FACH;
wobei die UE umfasst:
ein erstes Herstellungsmodul (420), welches dazu eingerichtet ist, eine Radio Resource Control-, RRC-, Verbindung mit der Basisstation herzustellen;
ein Überwachungsmodul (422), welches dazu eingerichtet ist, einen High Speed Shared Control Channel, HS-SCCH, zu überwachen und Kontrollinformationen zum Herstellen eines High Speed Downlink Shared Channels, HS-DSCH, auf dem HS-SCCH zu empfangen;
ein zweites Herstellungsmodul (424), welches dazu eingerichtet ist, einen HS-DSCH durch Anpassen der Kontrollinformationen herzustellen; und
ein erstes Übertragungsmodul (426), welches dazu eingerichtet ist, eine Übertragung von Dienstdaten mit der Basisstation auf dem HS-DSCH durchzuführen; und
wobei die Basisstation umfasst:
ein drittes Herstellungsmodul (400), welches dazu eingerichtet ist, die RRC-Verbindung mit der UE herzustellen; und
ein zweites Übertragungsmodul (402), welches dazu eingerichtet ist, eine Übertragung von Dienstdaten mit der UE auf dem HS-DSCH durchzuführen;
und **dadurch gekennzeichnet, dass**
das Überwachungsmodul (422) umfasst:
eine Leseeinheit, welche, wenn Daten Benutzerebenen-Daten sind, dazu eingerichtet ist, eine Leseoperation an dem fünften System Information Block, SIB5, durchzuführen; und eine Empfangseinheit, welche dazu eingerichtet ist, eine Benachrichtigung von der Basisstation durch den HS-SCCH zu erhalten, wobei die Benachrichtigung verwendet wird, um die UE zu benachrichtigen, Benutzerebenen-Daten zu erhalten; oder
eine Auswahleinheit, welche, wenn Daten Kontrollebenen-Daten sind, dazu eingerichtet ist, einen gemeinsamen High Speed Downlink Shared Channel Radio Network Temporary Identifier, H-RNTI, auszuwählen gemäß der Anzahl von gemeinsamen H-RNTIs, welche von SIB5 ausgesendet werden, und einer Ausgangs-UE-Identität;
und eine Überwachungseinheit, welche dazu eingerichtet ist, den HS-SCCH durch Verwendung des ausgewählten gemeinsamen H-RNTI zu überwachen.

8. System nach Anspruch 7, wobei die Basisstation ferner umfasst:
ein Benachrichtigungsmodul, welches dazu eingerichtet ist, eine RNC über eine Datenübertragungs-Fähigkeit einer entsprechenden Zelle im Zustand CELL-FACH zu benachrichtigen; und
ein Empfangsmodul, welches dazu eingerichtet ist, einen gemeinsamen Media Access Layer D, MAC-D, und einen gemeinsamen Radio Network Temporary Identifier, RNTI, zu erhalten, welche von der RNC zurückgeschickt werden.

9. System nach einem der Ansprüche 7 bis 8, wobei die Dienstdaten "Always on"-Dienstdaten sind.

## Revendications

1. Méthode de transmission de données de service comprenant :
(S102) un équipement d'utilisateur (UE), dans un état de canal descendant d'accès à une cellule (Cell ( CELL_FACH), établissant une connexion de contrôle de ressources radio (RRC) avec une station de base ;
(S104) l'UE surveillant le canal de contrôle partagé rapide (HS-SCCH) et acquérant des informations de contrôle pour établir un canal partagé de liaison descendante rapide (HS-DSCH) sur le HS-SCCH et
(S106) l'UE établissant le HS-DSCH en adoptant les informations de contrôle et en réalisant la transmission des données de service avec la station de base sur le HS-DSCH,
la méthode étant **caractérisée en ce que** :
quand les données sont des données de plan de l'utilisateur, l'UE surveillant le HS-SCCH comprend : l'UE réalisant une opération de lecture sur le cinquième bloc d'informations système (SIB5) et la station de base informant l'UE de la réception des données de plan de l'utilisateur par le biais du HS-SCCH ou
quand les données sont des données de plan de contrôle, l'UE surveillant le HS-SCCH comprend : l'UE sélectionnant un identifiant temporaire de réseau radio à canal partagé de liaison descendante rapide (H-RNTI) en fonction du nombre de H-RNTI communs diffusés par SIB5 et d'une identité initiale de l'UE et l'UE surveillant le HS-SCCH à l'aide du H-RNTI commun sélectionné.

2. Méthode selon la revendication 1, dans laquelle, avant que l'UE établisse une connexion RRC avec la station de base, la méthode comprend en outre :
la station de base qui informe le contrôle de réseau radio (RNC) d'une capacité de transmission des données de la cellule correspondante dans l'état de CELL_FACH et
la station de base recevant une couche d'accès au support D (MAC-D) et un identifiant temporaire de réseau radio (RNTI) qui sont renvoyés depuis le RNC.

3. Méthode selon la revendication 2, dans laquelle la station de base informe le RNC de la capacité de transmission de données par le biais d'une réponse d'audit et d'une indication de l'état des ressources.

4. Méthode selon la revendication 2, dans laquelle le RNC renvoie le MAC-D commun et le RNTI commun à la station de base en fournissant la demande de reconfiguration des ressources partagées physiques.

5. Méthode selon la revendication 1, dans laquelle l'UE établissant une connexion RRC avec la station de base comprend :
la station de base recevant une demande d'établissement de connexion RRC de l'UE dans l'état de CELL_FACH,
la station de base envoyant la demande d'établissement de connexion RRC reçue à RNC par l'intermédiaire d'un protocole de trame (Frame Protocol, FP), dans lequel la demande d'établissement de connexion RRC porte un identifiant temporaire de réseau radio amplifié (E-RNTI) attribué à l'UE depuis la station de base,
la station de base recevant une réponse d'établissement de connexion RRC du RNC envoyé par le biais du FP, dans laquelle la réponse d'établissement de connexion RRC porte un identifiant temporaire de réseau radio à canal partagé de liaison descendante rapide, H-RNTI, et l'E-RNTI qui sont attribués à l'UE et
la station de base envoyant la réponse d'établissement de connexion RRC à l'UE.

6. Méthode selon une des revendications 1 à 5, dans laquelle les données de service sont des données de service de type « Toujours actif ».

7. Système de transmission de données de service comprenant : une station de base et un équipement d'utilisateur (UE), à l'état de canal d'accès descendant de cellule (CELL_FACH) ;
l'UE comprend :
un premier module d'établissement (420), configuré pour établir une connexion de contrôle des ressources radio, RRC, avec la station de base,
un module de surveillance (422), configuré pour surveiller le canal de contrôle partagé rapide (High Speed Shared Control Channel, HS-SCCH) et acquérir des informations de contrôle pour établir un canal partagé de liaison descendante rapide (HS-DSCH) sur le HS-SCCH,
un deuxième module d'établissement (424), configuré pour établir le HS-DSCH en adoptant les informations de contrôle et
un premier module de transmission (426), configuré pour réaliser la transmission de données de service avec la station de base sur le HS-DSCH et
la station de base comprend :
un troisième module d'établissement (420), configuré pour établir la connexion RRC avec l'UE
et
un deuxième module de transmission (402), configuré pour réaliser la transmission de données de service avec l'UE sur le HS-DSCH
et **caractérisée en ce que** le module de surveillance (422) comprend :
un lecteur qui, quand les données sont des données de plan utilisateur, est configuré pour réaliser une opération de lecture sur le cinquième bloc d'informations système, SIB5, et un module de réception, configuré pour recevoir l'information de la station de base par le biais du HS-SCCH, dans lequel l'information est utilisée pour indiquer à l'UE qu'il va recevoir les données de plan de l'utilisateur ou un module de sélection qui, quand les données sont des données de plan de contrôle, est configuré pour sélectionner un identifiant temporaire de réseau radio à canal partagé de liaison descendante rapide (H-RNTI) en fonction du nombre de H-RNTI communs diffusés par SIB5 et d'une identité initiale de l'UE et un module de surveillance, configuré pour surveiller le HS-SCCH par l'utilisation du H-RNTI commun sélectionné.

8. Système selon la revendication 7, dans lequel la station de base comprend en outre :
un module d'information, configuré pour informer un RNC d'une capacité de transmission de données de la cellule correspondante dans l'état de CELL_FACH et un module de réception, configuré pour recevoir une couche d'accès au support D (MAC-D) et un identifiant temporaire de réseau radio (RNTI) commun qui sont renvoyés depuis le RNC.

9. Système selon une des revendications 7 à 8, dans lequel les données de service sont de type « Toujours actif ».
